# EUROPEAN PATENT SPECIFICATION

(11) **EP 3 022 470 B1**
(45) Date of publication and mention of the grant of the patent: **26.08.2020**
(21) Application number: 14748309.3
(22) Date of filing: 16.07.2014
(51) Int. Cl.: F16J 15/324, F16J 15/3244, F16J 15/00, F16J 15/34

(54) **SHAFT SEAL AND A METHOD OF OPERATING SUCH A SHAFT SEAL**
WELLENDICHTUNG UND VERFAHREN ZUM BETRIEB EINER DERARTIGEN WELLENDICHTUNG
GARNITURE D'ÉTANCHÉITÉ D'ARBRE ET PROCÉDÉ D'ACTIONNEMENT DE LADITE GARNITURE D'ÉTANCHÉITÉ D'ARBRE

(30) Priority: 17.07.2013 NL 2011179
(43) Date of publication of application: 25.05.2016
(73) Proprietor: IHC Holland IE B.V., 3361 EP Sliedrecht (NL)
(72) Inventor: VAN OPSTAL, Timothy Alexander, NL-3061 VZ Rotterdam (NL); KONING, Theodorus Adrianus, NL-4823 HK Breda (NL)
(74) Representative: Nederlandsch Octrooibureau
(86) International application number: PCT/NL2014/050486
(87) International publication number: WO 2015/009150

(56) References cited:
- EP-B1- 0 500 570
- EP-B1- 0 853 738
- WO-A1-2012/002812
- GB-A- 2 217 396
- JP-A- 2010 060 105
- NL-A- 9 400 685

## Description

### TECHNICAL FIELD

The invention relates to a shaft seal and a method of operating such a shaft seal, in particular to shaft seals in dredge pumps.

### BACKGROUND ART

Dredge pumps are used to pump a mixture of water and sand, clay, rocks, debris etc. The pumps comprise a rotor which is driven by a suitable engine via a drive shaft, which enters the pump housing via a shaft opening. To prevent the mixture from leaking out of the pump housing, the shaft opening is sealed by a (dredge pump) shaft seal.

The material to be pumped, in particular fine particles, can cause damage to the (dredge pump) shaft seal.

According to a known solution, the shaft seal comprises two lip seals positioned at different axial positions around the drive shaft, thereby creating a chamber in between the lip seals. This chamber is provided with high pressure (clean) water. The high pressure water has a pressure higher than the pressure inside the pump housing. The drive shaft is provided with small helical grooves, which transport the high pressure water in two opposite directions, underneath the lip seals, out of the chamber, thereby reducing the friction between the lip seals and the drive shaft and creating a water flow from the chamber towards the pump housing preventing particles from entering and damaging the lip seals.

According to another known solution, the lip seal closest to the pump housing is a lip seal orientated with the lip towards the pump housing. This lip seal is not provided with helical grooves or the like. The water provided to the chamber is of an equal or slightly higher pressure than the pressure in the pump housing. Additional water is flushed through the pump housing to prevent dirt from reaching the lip seal closest to the pump housing.

Such systems use a lot of (clean) water. Clean water is not always available at the location of the dredge pump e.g. at booster stations for long discharge lines, in which case an expansive and complex clean water supply system is required. Additionally, such a sealing system uses a lot of power and dilutes the mixture. This current sealing system is in particular complex and expensive in situations where multiple dredge pumps are assembled in series (e.g. three or more dredge pumps). In such situations, the complexity of the sealing, the power and clean water consumption and the subsequent mixture dilution may no longer be acceptable.

WO 2012/002812 A1 shows a shaft seal comprising at least one sealing element arranged around the drive shaft and bearing against the drive shaft. The seal has a flushing chamber adjoining the drive shaft, and a connection between the pressure chamber and the flushing chamber along which a portion of the mixture can be passed. In the connection, a filter module is arranged to at least partly remove solid particles from the mixture flowing through the connection.

EP 0853738 B1 shows a seal/bearing unit for an impeller pump. The seal/bearing unit has two rotor-stator pairs of tapered sleeves arranged back-to-back. The sleeves have a spiral groove, and convey barrier-liquid from an entry-mouth in an entry-chamber to an exit-mouth in an exit-chamber.

Other current solutions which don't require (clean) water to flush the sealing, wear out very fast (e.g. stuffing box), are expensive and not always suited for the dynamic displacements of a dredge pump, e.g. a mechanical seal with hard tungsten carbide or silicium carbide facings. Other known seals, such as dual/duo cone seals, can't withstand a high pressure difference (typically not more than 3 bar). Similar shaft seals are also known from NL 9 400 685 A and EP 0 853 738 B1.

### SUMMARY OF INVENTION

It would be desirable to provide a different sealing solution, which can be used in dredge pumps.

Therefore, according to a first aspect, there is provided a shaft seal, arranged to seal a rotatable drive shaft from a high pressure area, wherein the shaft seal comprises a shaft seal housing, a first seal and a second seal, wherein the first and second seals are positioned around the drive shaft at different axial positions, wherein a chamber is created in between the first and second seal, wherein the shaft seal comprises a fluid supply for supplying a pressurized fluid to the chamber, **characterized in that** the first seal is a mechanical seal positioned between the high pressure area and the chamber and the second seal is a lip seal.

The chamber is formed between the first seal, the second seal, the shaft seal housing and the rotatable drive shaft.

The first seal forms a barrier between the first chamber and a high pressure area, such as the pump housing of a dredge pump.

The term mechanical seal is used to refer to a seal comprising two relatively fixed or rigid seal parts that are positioned against each other, i.e. have contact surfaces positioned or pressed against each other. Both seal parts of the mechanical seal may comprise a metal contact surface. The metal contact surfaces of the mechanical seals, i.e. the surfaces which are in contact with each other, may be made of hardening steel. The first seal is a wear resistant seal.

The term lip seal is used to refer to a seal comprising a flexible seal part which is positioned against another relatively fixed or rigid seal part. The flexible seal part may be formed by a resilient material, such as rubber. The fixed or rigid seal part may be the rotatable drive shaft or may be a part, such as a bush, which is attached to the rotatable drive shaft. The second seal is a seal which can withstand large pressure differences, preferably pressure differences of more than 5 bar, more preferably of more than 10 bars or even more than 40 bars.

Such a shaft seal is advantageous as it uses less fluid and doesn't dilute the material being pumped by a dredge pump. The shaft seal is relatively cheap and comprises relatively few components, while it is durable and reliable and can withstand heavy dynamic loads acting on the drive shaft, typical in the field of dredging.

By using a mechanical seal, no or almost no fluid leaks away. The fluid being transported from the first to the second chamber, can be recollected and re-used from the second chamber.

According to an embodiment the shaft seal further comprises a third seal, wherein a second chamber is created in between the second seal and third seal and the shaft seal comprises a fluid drain for removing fluid from the second chamber.

The second chamber is formed between the second and third seals, the shaft seal housing and the rotatable drive shaft. The chamber in between the first and second seal may be referred to as the first chamber.

The third seal may also be a lip seal. The second seal is positioned in between the first and third seal along the axis of the drive shaft. Fluid leaking from the first to the second chamber can be removed and recycled via the fluid drain. The fluid drain is in fluid communication with the second chamber.

According to an embodiment the shaft seal comprises a plurality of further seals, wherein further chambers are created between the plurality of further seals, and the shaft seal comprises a fluid drain for removing fluid from one or more of the further chambers.

The further chambers are formed between further seals, the shaft seal housing and the rotatable drive shaft.

The plurality of further seals may also be lip seals. The plurality of further seals (a third, fourth, fifth, sixth, etc....) are positioned along the axis of the drive shaft creating chambers in between adjacent further seals. Fluid leaking from the first to one or more of the further chambers can be removed and recycled via the fluid drain. The fluid drain is in fluid communication with one or more of the further chambers.

The second, third and further seals may be lip seals, the lips thereof are orientated towards the first seal.

According to an embodiment the fluid is a lubricant, for instance comprising oil.

The fluid may comprise oil to prevent or at least minimizing oxidation of the mechanical seal.

According to an embodiment the fluid comprises oil and water.

The fluid is preferably thin, i.e. a fluid having a kinematic viscosity grade of 35 centiStokes or less, preferably in the range of 10 - 20 centiStokes, for instance 15 centiStokes. The values are measured at a temperature of 40°C.

The fluid may comprise a biodegradable oil. The fluid may comprise water and glycol.

According to an embodiment the mechanical seal comprises a stator ring and a rotor ring positioned against each other.

The rotor ring is attached to the rotatable drive shaft, the stator ring is attached to the shaft seal housing. The rotor and stator ring may be positioned and/or pressed against each other by resilient rings. The rotor and stator ring may each comprise a contact surface, the contact surfaces being positioned and/or pressed against each other. The contact surfaces may be made of metal, such as hardened steel.

According to an embodiment a contact surface between the stator ring and the rotor ring extends radially with respect to the rotatable drive shaft.

In other words, the normal direction of the contact surface (or contact plane) is substantially parallel to the axis of rotation of the rotatable drive shaft.

By orientating the contact surface between the stator ring and the rotor ring of the seal in this way, vibrations and shocks in the radial direction of the drive shaft can be absorbed without damaging the interface.

The contact surface between the seal parts of the second (and third) seal extends axially with respect to the rotatable drive shaft, i.e. the normal direction of the contact surface of the second seal being substantially radial.

According to an embodiment the mechanical seal is formed by a dual cone seal or duo cone seal.

Dual cone seals, also referred to as duo cone seals, are known to a skilled person and are for instance manufactured by Goetze.

According to an embodiment the lip seal comprises a flexible circular lip which encircles and presses against the rotatable drive shaft.

The lip, forming a seal between two adjacent chambers having a different pressure, is preferably directed towards (i.e. the free end of the lip seal points towards) the side with the highest pressure, such that the lip seal is pressed against the rotatable drive shaft more firmly by the over pressure.

The lip seal forming the second seal is therefore preferably directed towards the first chamber and thus away from the second chamber. In case the third seal is also formed by a lip seal, the lip seal is preferably directed towards the second chamber.

The flexible circular lip is made of a flexible resilient material, such as rubber.

Such lip seals are suitable seals for bridging relatively large pressure differences as the pressure difference itself is used to close the seal. Also, lip seals can take up radial vibrations and shocks of the rotatable drive shaft while still sealing the drive shaft.

According to an embodiment the drive shaft comprises a helical groove at the position of the second seal, which in use transports fluid underneath the second seal from the first chamber to the second chamber. This is done for cooling and lubrication purposes.

The second chamber comprises a fluid drain to remove fluid from the second chamber and re-circulate the removed fluid to the fluid supply.

The helical groove may be provided directly in the drive shaft, but may also be in a bush positioned around the drive shaft, which rotates together with the drive shaft.

According to an embodiment the shaft seal comprises an adjustable fluid supply for adjusting the pressure of the fluid supplied to the first chamber.

The pressure of the fluid supplied to the first chamber is preferably controlled to create a pressure in the first chamber that is approximately equal to the pressure at the opposite side of the first seal in the high pressure area, preferably in the range of -3 ... +3 bar. Preferably, the pressure in the first chamber is controlled such that the pressure in the first chamber is equal to or greater than the pressure at the opposite side of the first seal. In that case the overpressure in the first chamber may be in the range of 0 - 3 bar, preferably in the range of 0 - 2 bar, more preferably in the range of 0.1 - 0.5 bar, for instance 0.3 bar. Creating an overpressure helps to keep dirt out of the first seal.

According to an embodiment the adjustable fluid supply comprises a control system for controlling the pressure of the fluid supplied to the first chamber by the fluid supply.

The control system may be a mechanical control system or may be an electronic or computer system.

According to an embodiment the adjustable fluid supply comprises pressure sensors for measuring a pressure difference over the first seal and control the pressure of the fluid supplied to the first chamber by the fluid supply based on the determined pressure difference.

The adjustable fluid supply and in particular the control system may be arranged to create and maintain an overpressure inside the first chamber to prevent or at least minimize fluid and/or particles from entering the first seal.

The adjustable fluid supply may comprise a pump and/or a pressure let down element which may be under control of the control system.

According to an embodiment the adjustable fluid supply comprises a container arranged for comprising the fluid, the container having a fluid volume which is variable under the influence of a pressure acting on the mechanical seal at a side opposite of the first chamber or under influence of an ambient pressure or under influence of a pump pressure generated by a separate pump.

The container may for instance have a flexible wall which is exposed to the pressure acting on the mechanical seal at the opposite side of the first chamber. The flexible wall may for instance be exposed to the pressure inside a dredge pump. This results in a pressure of the fluid being supplied to the first chamber which is substantially equal to the pressure at the other side of the mechanical seal, thereby preventing or at least minimizing fluid and material entering the mechanical seal from this opposite side.

According to a further aspect there is provided a pump comprising a shaft seal according to the above.

The pump may be a land pump or may be a underwater pump, arranged to function under relatively high pressures at great depths, for instance at depths more than 10, 100 or 1000 meters. The pump may be arranged to function at underwater depths of several kilometers.

According to a further aspect there is provided a method of operating a shaft seal, wherein the shaft seal is arranged to seal a rotatable drive shaft from a high pressure area, wherein the shaft seal comprises a shaft seal housing, a first seal and a second seal, wherein the first and second seals are positioned around the drive shaft at different axial positions, wherein a first chamber is created in between the first and second seal, wherein the shaft seal comprises a fluid supply for supplying a pressurized fluid to the first chamber, **characterized by** the first seal (10) being a mechanical seal positioned between the high pressure area and the first chamber (4) and the second seal (20) being a lip seal, wherein the method comprises controlling the fluid supply to maintain a predetermined pressure inside the first chamber (10) with respect to a pressure in the high pressure area.

According to an embodiment the pressure inside the first chamber is an overpressure, which is in the range of 0.1 - 0.5 bar, for instance 0.3 bar.

According to an embodiment the pressure inside the first chamber is controlled to keep the pressure over the first seal between -3 ... +3 bar.

According to an embodiment the shaft seal further comprises a third seal, wherein a second chamber is created in between the second seal and third seal and the shaft seal comprises a fluid drain for removing fluid from the second chamber, and the method comprises removing fluid from the second chamber. The method may further comprise recirculation of the fluid.

According to an embodiment the shaft seal comprises a plurality of further seals, wherein further chambers are created between the plurality of further seals, and the shaft seal comprises a fluid drain for removing fluid from one or more of the further chambers, and the method comprises removing fluid from one or more of the further chambers.

### BRIEF DESCRIPTION OF DRAWINGS

Embodiments will now be described, by way of example only, with reference to the accompanying schematic drawings in which corresponding reference symbols indicate corresponding parts, and in which:
Fig. 1 schematically shows a shaft seal according to an embodiment,
Fig. 2 schematically shows a more detailed view of a shaft seal according to an embodiment, and
Fig. 3 schematically shows an alternative embodiment.

The figures are meant for illustrative purposes only, and do not serve as restriction of the scope or the protection as laid down by the claims.

### DESCRIPTION OF EMBODIMENTS

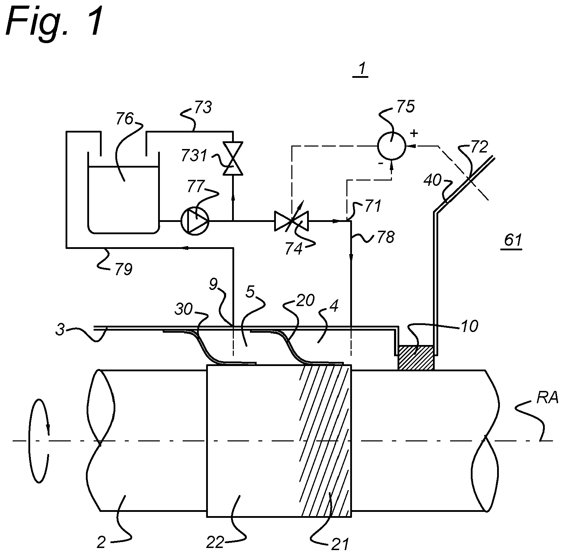

Fig. 1 schematically shows a shaft seal 1 provided with respect to a rotatable shaft 2. The left side of the shaft 2 is connected to a drive member (not shown), such as an engine. The right side of the shaft enters a pump housing 40 and is connected to an impeller or the like (not shown) of a dredge pump. Reference 61 is provided to indicate the inside of the pump housing 61.

In order to seal the relatively high pressure environment inside the pump housing from the ambient pressure, the shaft seal 1 comprises a first seal 10, a second seal 20 and a third seal 30. The seals 10, 20, 30 are provided at different axial positions, the first seal 10 being with one side in contact with the high pressure environment, in this embodiment the inside of the pump housing 61 and with its other end with a first chamber 4, formed in between the first and second seal 10, 20. In between the second and third seal 20, 30 a second chamber 5 is formed. The third seal is furthest from the high pressure environment.

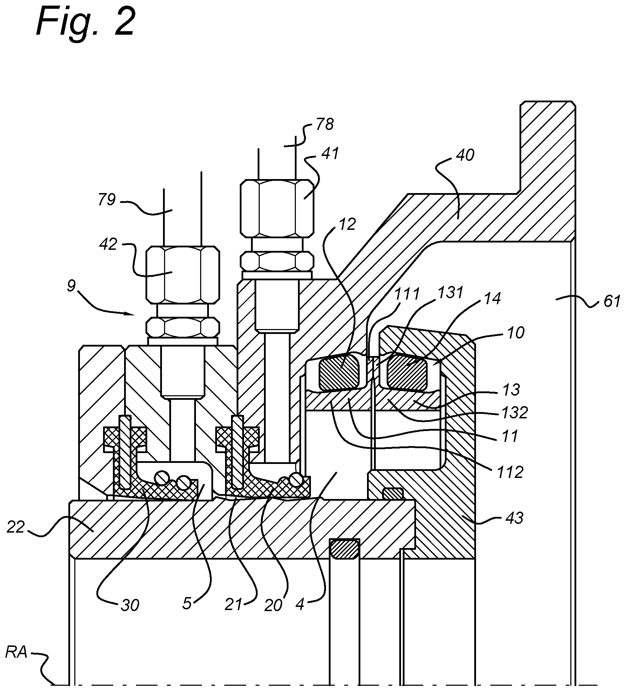

The first seal 10 is a mechanical seal, formed by two rigid seal surfaces positioned against each other. In the embodiment shown in Fig. 1 this is shown schematically by a ring-shaped member 10 (stator ring) being in contact with the drive shaft 2 (forming a rotor ring). An alternative and more detailed example will be provided below with reference to Fig. 2.

The second and third seals 20, 30 are lip seals, comprising a flexible part being pressed against the drive shaft 2 or against a bushing 22 provided at the drive shaft 2. The drive shaft or the bushing 22 may be provided with one or more helical grooves 21 at the position of the second seal 20.

In between the second and third seal 20, 30 a second chamber 5 is formed.

The shaft seal 1 comprises a fluid supply 74 - 78.

The fluid supply comprises a fluid reservoir 76 and is arranged to provide high pressure fluid to the first chamber 4. The fluid supply comprises a fluid supply conduit 78 which is in fluid communication with the fluid reservoir 76 and with the first chamber 4. The fluid supply conduit 78 comprises a controllable pump 77 and optionally a pressure let down element 74.

The fluid supply further comprises a control system 75. At least one of the pump 77 and the pressure let down element 74 may be under control of the control system 75. The control system 75 is arranged to control the pump 77 and/or the pressure let down element 74 to control the pressure of the fluid provided to the first chamber 4.

The fluid supply comprises a pressure measurement device 71, 72 arranged to measure a pressure difference over the first seal 10. The pressure measurement device comprises pressure sensors for measuring a pressure difference over the first seal 10.

A first pressure sensor 71 may be provided for measuring a pressure in the fluid supply conduit 78 downstream of the pump 77 and the pressure let down element 74. The first pressure sensor 71 may also be positioned to measure a pressure inside the first chamber 4.

A second pressure sensor 72 may be provided to measure a pressure inside the high pressure environment, e.g. the pump housing 61.

The measurement readings of the first and second pressure sensors 71, 72 are provided to the control system 75. The control system 75 controls the pump 77 and/or the pressure let down element 74 to maintain a predetermined pressure difference over the first seal 10. Preferably, a small over pressure is maintained in the first chamber 10 with respect to the inside of the pump housing 61.

The fluid inside the fluid reservoir 76 comprises oil and water. The fluid is preferably a thin fluid.

The drive shaft 2 is provided with helical grooves 21 which in use transport the fluid underneath the second seal 20 from the first chamber 4 into the second chamber 5. The second chamber is formed by the second seal 20, the third seal 30, the drive shaft 2 and the shaft seal housing 3.

The fluid supply further comprises a fluid drain 9 comprising a fluid return conduit 79. The fluid return conduit 79 is with one end connected to the second chamber 5 and with its other end to the fluid reservoir 76. The fluid return conduit 79 may comprise a pump (not shown) and is provided to recycle fluid from the second chamber 5 to the fluid reservoir 76.

The fluid supply further comprises a feedback conduit 73 with an overpressure or controllable valve 731. The feedback conduit 73 is with one end connected to the fluid supply conduit 78 and with its other end to the fluid reservoir 76 providing a feedback loop to recirculate excess fluid.

The embodiments provide a shaft seal which comprise a wear resistant first seal 10 located nearest to the high pressure environment. In particular when the high pressure environment is the pump housing 40 of a dredge pump, a wear resistant first seal 10 is very advantageous. At the same time, the shaft seal 1 is capable of withstanding high pressure differences as a result of the second and third seals 20, 30. Finally, although a fluid supply is needed for optimal functioning of the second seal 20, the fluid can be recirculated which provides the advantage that no water supply or the like is present as no or at least little water is lost. Also, the high pressure environment is not diluted by the fluid.

Fig. 2 shows a more detailed view of an embodiment, in which the same references are used to refer to the same elements. Fluid supply conduit 78 is connected to the first chamber 4 by a connection 41. Return conduit 79 is connected to the second chamber 5 by a connection 42.

The first seal 10 is a mechanical seal and comprises a stator ring 11 and a rotor ring 13. The stator ring 11 and rotor ring 13 have similar or even identical dimensions and are positioned against each other with respective contact surfaces. The contact plane extends in a radial direction with respect to the rotatable drive shaft 2. As a result, radial movements and vibrations which may occur when the drive shaft 2 is in rotation, can be absorbed by the first seal 10.

The stator ring 11 and rotor ring 13 have a L-shaped cross-section (as shown in Fig. 2). Both the stator ring 11 and the rotor ring have a first leg 111, 131 pointing away from the drive shaft 2 and being positioned against each other, and both have a second leg 112, 132 pointing away from each other. The second legs 112, 132 are facing the first chamber 4. This orientation helps to provide a reliable seal. As in use an overpressure is created in the first chamber 4, the over pressure presses against the second legs 112, 132 which thereby closes the first seal 10.

In between the first and second legs 111, 112 of the stator ring 11 a flexible or resilient ring 12 is provided. The pump housing 40 is formed to create an annular space together with the stator ring 11 to receive the ring 12. The ring 12 is provided to press the stator ring 11 against the rotor ring 13.

In between the first and second legs 131, 132 of the rotor ring 13 a flexible or resilient ring 14 is provided. A rotatable part 43 of the pump housing 41 forms an annular space together with the rotor ring 11 to receive the ring 14. The ring 14 is provided to press the rotor ring 13 against the stator ring 11.

The two flexible or resilient rings 12, 14 are provided to press the stator and rotor ring 11, 13 against each other, even when the stator and rotor rings 11, 13 would suffer from wear. Such a seal is also known as a dual cone seal or duo cone seal.

In use, the rotatable drive shaft 2 rotates about rotational axis RA and fluid is supplied to the first chamber 4 by the fluid supply via fluid supply conduit 78. The control system 75 determines a pressure difference over the first seal, e.g. by pressure readings of the first and second pressure sensors 71, 72 and controls the pump 77 and/or the pressure let down element 74 to create an overpressure inside the first chamber 4 with respect to the high pressure environment at the opposite side of the first seal 10.

Fluid will leak into the second chamber 5, where it is removed and recycled via fluid return conduit 79.

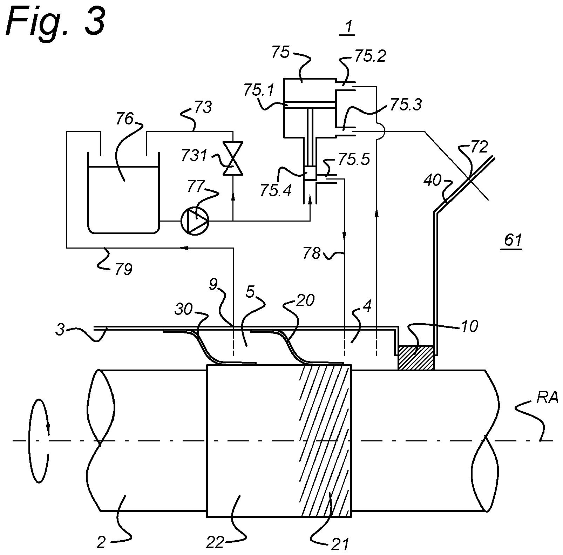

Fig. 3 schematically depicts an alternative embodiment similar to Fig. 1, but now the control system 75 being formed by a mechanical control system, comprising a cylinder and a piston 75.1, the piston 75.1 creating two chambers in the cylinder on opposite sides of the piston 75.1. One chamber is in fluid communication with the inside of the pump housing 61 via conduit 75.3, the other chamber is in fluid communication with the first chamber 4 via conduit 75.2. Optionally, a spring member may be mounted in one of the chambers to bias the piston 75.1 in one or the other direction.

The piston 75.1 is connected to a block member 75.4 which moves together with the piston 75.1. the block member 75.4 is positioned in a corner part 75.5 of the fluid supply conduit 78. The position of the piston 75.1 changes under influence of a pressure difference between the chambers inside the piston 75.1. As a result, the position of the block member 75.4 also changes and thereby a cross-sectional flow area of the fluid supply conduit 78. A larger cross-sectional flow area will result in a lower flow resistance in the fluid supply conduit 78 and thus in a higher pressure in the first chamber 4. This way an equilibrium between the pressure in the first chamber 4 and the inside of the pump housing 61 can be achieved. A predetermined pressure difference, preferably in the range -3 ... +3 bar can be achieved by adding a spring member in one of the chambers in the piston 75.1 or by adding a relatively small pump 77 (as shown in Fig. 3 by way of example) or pressure let down device in the fluid supply conduit 78.

The descriptions above are intended to be illustrative, not limiting. It will be apparent to the person skilled in the art that alternative and equivalent embodiments of the invention can be conceived and reduced to practice, without departing from the scope of the claims set out below.

## Claims

1. Shaft seal (1), arranged to seal a rotatable drive shaft (2) from a high pressure area, wherein the shaft seal (1) comprises a shaft seal housing (3), a first seal (10) and a second seal (20), wherein the first and second seals (10, 20) are positioned around the drive shaft (2) at different axial positions, wherein a chamber (4) is created in between the first (10) and second seal (20), wherein the shaft seal (1) comprises a fluid supply (74 - 78) for supplying a pressurized fluid to the chamber (4),
**characterized in that** the first seal (10) is a mechanical seal positioned between the high pressure area and the chamber and the second seal (20) is a lip seal.

2. Shaft seal (1) according to claim 1, wherein the shaft seal (1) further comprises a third seal (30), wherein a second chamber (5) is created in between the second seal (20) and third seal (30) and the shaft seal (1) comprises a fluid drain (9) for removing fluid from the second chamber (5).

3. Shaft seal (1) according to claim 1, wherein the shaft seal (1) comprises a plurality of further seals (30), wherein further chambers are created between the plurality of further seals (30), and the shaft seal (1) comprises a fluid drain (9) for removing fluid from one or more of the further chambers.

4. Shaft seal (1) according to any one of the preceding claims, wherein the fluid is a lubricant, for instance comprising oil, and/or, wherein the fluid comprises oil and water.

5. Shaft seal (1) according to any one of the preceding claims, wherein the mechanical seal (10) comprises a stator ring (11) and a rotor ring (13) positioned against each other, preferably wherein a contact surface between the stator ring (11) and the rotor ring (13) extends radially with respect to the rotatable drive shaft.

6. Shaft seal (1) according to any one of the preceding claims, wherein the mechanical seal (10) is formed by a dual cone seal or duo cone seal.

7. Shaft seal according to any one of the preceding claims, wherein the lip seal (20) comprises a flexible circular lip which encircles and presses against the rotatable drive shaft (2).

8. Shaft seal (1) according to any one of the preceding claims, wherein the drive shaft (2) comprises a helical groove (21) at the position of the second seal (20), which in use transports fluid underneath the second seal (20) from the first chamber (10) to the second chamber (5).

9. Shaft seal (1) according to any one of the preceding claims, wherein the shaft seal (1) comprises an adjustable fluid supply (74 - 78) for adjusting the pressure of the fluid supplied to the first chamber (4).

10. Shaft seal according to claim 9 , wherein the adjustable fluid supply (74 - 78) comprises a control system (75) for controlling the pressure of the fluid supplied to the first chamber (4) by the fluid supply and/or a pressure sensors for measuring a pressure difference over the first seal (10) and control the pressure of the fluid supplied to the first chamber (4) by the fluid supply based on the determined pressure difference.

11. Shaft seal according to claim 9 , wherein the adjustable fluid supply comprises a container arranged for the fluid, the container having a fluid volume which is variable under the influence of a pressure acting on the mechanical seal at the high pressure area side or under influence of an ambient pressure or under influence of a pump pressure generated by a separate pump.

12. Pump comprising a shaft seal according to any one of the preceding claims.

13. Method of operating a shaft seal (1), wherein the shaft seal (1) is arranged to seal a rotatable drive shaft (2) from a high pressure area, wherein the shaft seal (1) comprises a shaft seal housing (3), a first seal (10) and a second seal (20), wherein the first and second seals (10, 20) are positioned around the drive shaft (2) at different axial positions, wherein a first chamber (4) is created in between the first (10) and second seal (20), wherein the shaft seal (1) comprises a fluid supply (74 - 78) for supplying a pressurized fluid to the first chamber (4),
**characterized by** the first seal (10) being a mechanical seal positioned between the high pressure area and the first chamber (4) and the second seal (20) being a lip seal, wherein the method comprises controlling the fluid supply to maintain a predetermined pressure inside the first chamber (10) with respect to a pressure in the high pressure area.

14. Method according to claim 13, wherein the pressure inside the first chamber (10) is an overpressure, which is in the range of 0.1 - 0.5 bar, for instance 0.3 bar, and/or wherein the pressure inside the first chamber (10) is controlled to keep the pressure over the first seal (10) between -3 ... +3 bar.

15. Method according to any one of the claims 13-14, wherein the shaft seal (1) further comprises a third seal (30), wherein a second chamber (5) is created in between the second seal (20) and third seal (30) and the shaft seal (1) comprises a fluid drain (9) for removing fluid from the second chamber (5), and the method comprises removing fluid from the second chamber (5), and/or wherein the shaft seal (1) comprises a plurality of further seals (30), wherein further chambers are created between the plurality of further seals (30), and the shaft seal (1) comprises a fluid drain (9) for removing fluid from one or more of the further chambers, and the method comprises removing fluid from one or more of the further chambers.

## Patentansprüche

1. Wellendichtung (1), angeordnet zum Abdichten einer rotierbaren Antriebswelle (2) von einem Hochdruckbereich, wobei die Wellendichtung (1) ein Wellendichtungsgehäuse (3), eine erste Dichtung (10) und eine zweite Dichtung (20) aufweist, wobei die erste und die zweite Dichtung (10, 20) um die Antriebswelle (2) herum an unterschiedlichen axialen Positionen positioniert sind, wobei zwischen der ersten (10) und der zweiten Dichtung (20) eine Kammer (4) erzeugt wird, wobei die Wellendichtung (1) eine Fluidzufuhr (74 - 78) zum Zuführen eines Druckfluides in die Kammer (4) aufweist,
**dadurch gekennzeichnet, dass** die erste Dichtung (10) eine zwischen dem Hochdruckbereich und der Kammer positionierte mechanische Dichtung ist und die zweite Dichtung (20) eine Lippendichtung ist.

2. Wellendichtung (1) nach Anspruch 1, wobei die Wellendichtung (1) des Weiteren eine dritte Dichtung (30) aufweist, wobei zwischen der zweiten Dichtung (20) und der dritten Dichtung (30) eine zweite Kammer (5) erzeugt wird, und die Wellendichtung (1) einen Fluidablass (9) zum Entfernen von Fluid aus der zweiten Kammer (5) aufweist.

3. Wellendichtung (1) nach Anspruch 1, wobei die Wellendichtung (1) eine Vielzahl weiterer Dichtungen (30) aufweist, wobei zwischen der Vielzahl weiterer Dichtungen (30) weitere Kammern erzeugt werden, und die Wellendichtung (1) einen Fluidablass (9) zum Entfernen von Fluid aus einer oder mehreren der weiteren Kammern aufweist.

4. Wellendichtung (1) nach einem der vorhergehenden Ansprüche, wobei das Fluid ein Schmiermittel ist, das zum Beispiel Öl enthält, und/oder wobei das Fluid Öl und Wasser enthält.

5. Wellendichtung (1) nach einem der vorhergehenden Ansprüche, wobei die mechanische Dichtung (10) einen Ständerring (11) und einen Läuferring (13) umfasst, die gegeneinander angeordnet sind, wobei vorzugsweise eine Kontaktfläche zwischen dem Ständerring (11) und dem Läuferring (13) sich radial bezüglich der rotierbaren Antriebswelle erstreckt.

6. Wellendichtung (1) nach einem der vorhergehenden Ansprüche, wobei die mechanische Dichtung (10) durch eine Doppelkegeldichtung oder Gleitringdichtung gebildet ist.

7. Wellendichtung nach einem der vorhergehenden Ansprüche, wobei die Lippendichtung (20) eine elastische kreisrunde Lippe enthält, welche die rotierbare Antriebswelle (2) umgibt und gegen diese drückt.

8. Wellendichtung (1) nach einem der vorhergehenden Ansprüche, wobei die Antriebswelle (2) an der Position der zweiten Dichtung (20) eine Spiralnut (21) aufweist, die bei Verwendung Fluid unter der zweiten Dichtung (20) von der ersten Kammer (10) zu der zweiten Kammer (5) fördert.

9. Wellendichtung (1) nach einem der vorhergehenden Ansprüche, wobei die Wellendichtung (1) eine einstellbare Fluidzufuhr (74 - 78) zum Einstellen des Drucks des der ersten Kammer (4) zugeführten Fluids aufweist.

10. Wellendichtung nach Anspruch 9, wobei die einstellbare Fluidzufuhr (74 - 78) eine Steuerung (75) aufweist zur Regelung des Drucks des der ersten Kammer (4) durch die Fluidzufuhr zugeführten Fluids und/oder Drucksensoren zum Messen einer Druckdifferenz über der ersten Dichtung (10) und Regelung des Drucks des der ersten Kammer (4) durch die Fluidzufuhr zugeführten Fluids basierend auf der bestimmten Druckdifferenz.

11. Wellendichtung nach Anspruch 9, wobei die einstellbare Fluidzufuhr einen für das Fluid eingerichteten Behälter umfasst, wobei der Behälter ein Fluidvolumen besitzt, das veränderlich ist unter dem Einfluss eines auf die mechanische Dichtung wirkenden Drucks auf der Seite des Hochdruckbereichs oder unter dem Einfluss eines Umgebungsdrucks oder unter dem Einfluss eines durch eine getrennte Pumpe erzeugten Pumpendrucks.

12. Pumpe, umfassend eine Wellendichtung nach einem der vorhergehenden Ansprüche.

13. Verfahren zum Handhaben einer Wellendichtung (1), wobei die Wellendichtung (1) angeordnet ist, um eine rotierbare Antriebswelle (2) von einem Hochdruckbereich abzudichten, wobei die Wellendichtung (1) ein Wellendichtungsgehäuse (3), eine erste Dichtung (10) und eine zweite Dichtung (20) umfasst, wobei die erste und die zweite Dichtung (10, 20) um die Antriebswelle (2) herum in unterschiedlichen axialen Positionen angeordnet sind, wobei zwischen der ersten (10) und der zweiten Dichtung (20) eine erste Kammer (4) erzeugt wird, wobei die Wellendichtung (1) eine Fluidzufuhr (74 - 78) zum Zuführen eines Druckfluides zu der ersten Kammer (4) aufweist,
**gekennzeichnet durch** die erste Dichtung (10), die eine zwischen dem Hochdruckbereich und der ersten Kammer (4) angeordnete mechanische Dichtung ist, und die zweite Dichtung (20) eine Lippendichtung ist, wobei das Verfahren das Steuern der Fluidzufuhr umfasst, um einen vorbestimmten Druck im Innern der ersten Kammer (10) bezüglich eines Drucks im Hochdruckbereich beizubehalten.

14. Verfahren nach Anspruch 13, wobei der Druck im Innern der ersten Kammer (10) ein Überdruck ist, der im Bereich von 0,1 bis 0,5 bar, zum Beispiel 0,3 bar liegt, und/oder wobei der Druck im Innern der ersten Kammer (10) geregelt wird, um den Druck über der ersten Dichtung (10) zwischen -3 ...+3 bar zu halten.

15. Verfahren nach einem der Ansprüche 13 bis 14, wobei die Wellendichtung (1) des Weiteren eine dritte Dichtung (30) aufweist, wobei zwischen der zweiten Dichtung (20) und der dritten Dichtung (30) eine zweite Kammer (5) erzeugt wird, und die Wellendichtung (1) einen Fluidablass (9) aufweist, um aus der zweiten Kammer (5) Fluid zu entfernen, und das Verfahren das Entfernen von Fluid aus der zweiten Kammer (5) umfasst, und/oder wobei die Wellendichtung (1) eine Vielzahl weiterer Dichtungen (30) aufweist, wobei zwischen der Vielzahl weiterer Dichtungen (30) weitere Kammern erzeugt werden, und die Wellendichtung (1) einen Fluidablass (9) zum Entfernen von Fluid aus einer oder mehreren der weiteren Kammern aufweist, und das Verfahren das Entfernen von Fluid aus einer oder mehreren der weiteren Kammern umfasst.

## Revendications

1. Garniture d'étanchéité d'arbre (1), conçue pour rendre étanche un arbre d'entraînement rotatif (2) par rapport à une zone haute pression, dans laquelle la garniture d'étanchéité d'arbre (1) comprend un logement de garniture d'étanchéité d'arbre (3), une première garniture d'étanchéité (10) et une deuxième garniture d'étanchéité (20), dans laquelle les première et deuxième garnitures d'étanchéité (10, 20) sont positionnées autour de l'arbre d'entraînement (2) dans des positions axiales différentes, dans laquelle une chambre (4) est créée entre les première (10) et deuxième (20) garnitures d'étanchéité, dans laquelle la garniture d'étanchéité d'arbre (1) comprend une alimentation en fluide (74-78) pour fournir un fluide sous pression à la chambre (4),
**caractérisée en ce que** la première garniture d'étanchéité (10) est une garniture d'étanchéité mécanique positionnée entre la zone haute pression et la chambre et la deuxième garniture d'étanchéité (20) est une garniture d'étanchéité à lèvre.

2. Garniture d'étanchéité d'arbre (1) selon la revendication 1, dans laquelle la garniture d'étanchéité d'arbre (1) comprend en outre une troisième garniture d'étanchéité (30), dans laquelle une seconde chambre (5) est créée entre la deuxième garniture d'étanchéité (20) et la troisième garniture d'étanchéité (30) et la garniture d'étanchéité d'arbre (1) comprend un drain de fluide (9) pour éliminer du fluide à partir de la seconde chambre (5).

3. Garniture d'étanchéité d'arbre (1) selon la revendication 1, dans laquelle la garniture d'étanchéité d'arbre (1) comprend une pluralité de garnitures d'étanchéité supplémentaires (30), dans laquelle des chambres supplémentaires sont créées entre la pluralité de garnitures d'étanchéité supplémentaires (30), et la garniture d'étanchéité d'arbre (1) comprend un drain de fluide (9) pour éliminer du fluide à partir d'une ou plusieurs des chambres supplémentaires.

4. Garniture d'étanchéité d'arbre (1) selon l'une quelconque des revendications précédentes, dans laquelle le fluide est un lubrifiant, comprenant par exemple de l'huile, et/ou dans laquelle le fluide comprend de l'huile et de l'eau.

5. Garniture d'étanchéité d'arbre (1) selon l'une quelconque des revendications précédentes, dans laquelle la garniture d'étanchéité mécanique (10) comprend une bague de stator (11) et une bague de rotor (13) positionnées l'une contre l'autre, de préférence dans laquelle une surface de contact entre la bague de stator (11) et la bague de rotor (13) s'étend radialement par rapport à l'arbre d'entraînement rotatif.

6. Garniture d'étanchéité d'arbre (1) selon l'une quelconque des revendications précédentes, dans laquelle la garniture d'étanchéité mécanique (10) est formée par une garniture d'étanchéité à double cône ou une garniture d'étanchéité à deux cônes.

7. Garniture d'étanchéité d'arbre selon l'une quelconque des revendications précédentes, dans laquelle la garniture d'étanchéité à lèvre (20) comprend une lèvre circulaire flexible qui encercle et appuie contre l'arbre d'entraînement rotatif (2).

8. Garniture d'étanchéité d'arbre (1) selon l'une quelconque des revendications précédentes, dans lequel l'arbre d'entraînement (2) comprend une rainure hélicoïdale (21) dans la position de la deuxième garniture d'étanchéité (20) qui, en utilisation, transporte du fluide sous la deuxième garniture d'étanchéité (20) de la première chambre (10) vers la seconde chambre (5).

9. Garniture d'étanchéité d'arbre (1) selon l'une quelconque des revendications précédentes, dans laquelle la garniture d'étanchéité d'arbre (1) comprend une alimentation en fluide ajustable (74-78) pour ajuster la pression du fluide fourni à la première chambre (4).

10. Garniture d'étanchéité d'arbre selon la revendication 9, dans laquelle l'alimentation en fluide ajustable (74 à 78) comprend un système de commande (75) pour commander la pression du fluide fourni à la première chambre (4) par l'alimentation fluidique et/ou des capteurs de pression pour mesurer une différence de pression sur la première garniture d'étanchéité (10) et commander la pression du fluide fourni à la première chambre (4) par l'alimentation en fluide sur la base de la différence de pression déterminée.

11. Garniture d'étanchéité d'arbre selon la revendication 9, dans laquelle l'alimentation en fluide ajustable comprend un conteneur conçu pour le fluide, le conteneur ayant un volume de fluide qui est variable sous l'influence d'une pression agissant sur la garniture d'étanchéité mécanique du côté de la zone haute pression ou sous l'influence d'une pression ambiante ou sous l'influence d'une pression de pompe générée par une pompe séparée.

12. Pompe comprenant une garniture d'étanchéité d'arbre selon l'une quelconque des revendications précédentes.

13. Méthode de fonctionnement d'une garniture d'étanchéité d'arbre (1), dans laquelle la garniture d'étanchéité d'arbre (1) est conçue pour rendre étanche un arbre d'entraînement rotatif (2) par rapport à une zone haute pression, dans laquelle la garniture d'étanchéité d'arbre (1) comprend un logement de garniture d'étanchéité d'arbre (3), une première garniture d'étanchéité (10) et une deuxième garniture d'étanchéité (20), dans laquelle les première et deuxième garnitures d'étanchéité (10, 20) sont positionnées autour de l'arbre d'entraînement (2) dans des positions axiales différentes, dans laquelle une première chambre (4) est créée entre les deux première (10) et deuxième (20) garnitures d'étanchéité, dans laquelle la garniture d'étanchéité d'arbre (1) comprend une alimentation en fluide (74-78) pour fournir un fluide sous pression à la première chambre (4),
**caractérisée en ce que** la première garniture d'étanchéité (10) est une garniture d'étanchéité mécanique positionné entre la zone haute pression et la première chambre (4) et la deuxième garniture d'étanchéité (20) est une garniture d'étanchéité à lèvre, dans laquelle la méthode comprend une commande de l'alimentation en fluide pour maintenir une pression prédéterminée à l'intérieur de la première chambre (10) par rapport à une pression dans la zone haute pression.

14. Méthode selon la revendication 13, dans laquelle la pression à l'intérieur de la première chambre (10) est une surpression, qui se situe dans la plage de 0,1 à 0,5 bar, par exemple de 0,3 bar, et/ou dans laquelle la pression à l'intérieur de la première chambre (10) est commandée pour maintenir la pression sur la première garniture d'étanchéité (10) entre -3 ... +3 bar.

15. Méthode selon l'une quelconque des revendications 13 à 14, dans laquelle la garniture d'étanchéité d'arbre (1) comprend en outre une troisième garniture d'étanchéité (30), dans laquelle une seconde chambre (5) est créée entre la deuxième garniture d'étanchéité (20) et la troisième garniture d'étanchéité (30) et la garniture d'étanchéité d'arbre (1) comprend un drain de fluide (9) pour éliminer le fluide de la seconde chambre (5), et la méthode comprend l'élimination du fluide à partir de la seconde chambre (5), et/ou dans laquelle la garniture d'étanchéité d'arbre (1) comprend une pluralité de garnitures d'étanchéité supplémentaires (30), dans lesquels des chambres supplémentaires sont créées entre la pluralité de garnitures d'étanchéité supplémentaires (30), et la garniture d'étanchéité d'arbre (1) comprend un drain de fluide (9) pour éliminer du fluide à partir d'une ou plusieurs des chambres supplémentaires, et la méthode comprend une élimination du fluide à partir d'une ou plusieurs des chambres supplémentaires.
